# EUROPÄISCHE PATENTANMELDUNG

(11) **EP 0 599 398 A2**
(43) Veröffentlichungstag der Anmeldung: **01.06.1994**
(21) Anmeldenummer: 93203213.9
(22) Anmeldetag: 17.11.1993
(51) Int. Cl.: H04N 5/16, H04N 5/20

(54) **Schaltungsanordnung zum Verarbeiten eines Videosignals**

(30) Priorität: 24.11.1992 DE 4239365
(71) Anmelder: Philips Patentverwaltung GmbH, 22335 Hamburg (DE); Philips Electronics N.V., 5621 BA Eindhoven (NL)
(72) Erfinder: Harlos, Hartmut, c/o Philips Patentverwaltung GmbH, D-20097 Hamburg (DE); Kröner, Klaus, c/o Philips Patentverwaltung GmbH, D-20097 Hamburg (DE); Peters, Matthias, c/o Philips Patentverwaltung, D-20097 Hamburg (DE); Wölber, Jörg, c/o Philips Patentverwaltung GmbH, D-20097 Hamburg (DE)
(74) Vertreter: Peters, Carl Heinrich, Dipl.-Ing.

(57) **Zusammenfassung**

Es wird eine Schaltungsanordnung zum Verarbeiten eines Videosignals (V), welches einen festgelegten Schwarzpegel (SP), einen vorgegebenen Weiß-Spitzenwert (WW) sowie einen vom Bildinhalt (während tb) abhängigen Schwarz-Spitzenwert (SW) aufweist, beschrieben, bei der eine korrekte Darstellung der schwärzesten und hellsten Stellen des Bildinhalts des Videosignals (V) aufwandsarm und störsicher ermöglicht wird. Dazu ist die Schaltungsanordnung versehen mit
- einer Detektionsanordnung (1) zum Detektieren der Differenz zwischen dem festgelegten Schwarzpegel (SP) im Videosignal (V) und dem aus dem Bildinhalt (während tb) des Videosignals (V) erfaßten Schwarz-Spitzenwert (SW),
- einer Pegel-Verschiebeanordnung (6) zum Bilden eines schwarzwertkorrigierten Videosignals (V') durch verschieben des Pegels des Bildinhaltes des Videosignals (V) um die detektierte Differenz in Richtung auf den Schwarzpegel (SP) sowie
- einer Amplitudensteueranordnung (8) zum Bilden eines amplitudenkorrigierten Videosignals (V'') durch Nachsteuern der Amplitude des Bildinhalts (während tb) des schwarzwertkorrigierten Videosignals (V') gemäß einem aus der detektierten Differenz gewonnenen Amplitudensteuersignal derart, daß im amplitudenkorrigierten Videosignal (V'') derselbe vorgegebene Weiß-Spitzenwert (WW) wie im Videosignal (V) wiederhergestellt wird.

## Beschreibung

Die Erfindung bezieht sich auf eine Schaltungsanordnung zum Verarbeiten eines Videosignals.

Die Verarbeitung eines Videosignals in einem Fernsehempfänger ist mehreren Bedingungen unterworfen, durch die eine einwandfreie Wiedergabe des Bildinhalts des Videosignals in einer Bildwiedergabeanordnung, beispielsweise einer Bildröhre, sichergestellt werden soll. Eine der Maßnahmen zur Sicherstellung einer korrekten Bildwiedergabe liegt in der sogenannten Klemmung eines festgelegten Schwarzpegels im Videosignal auf einen vorgegebenen Wert. Durch diese Klemmung wird in das Videosignal ein vom Sender zum Fernsehempfänger nicht übertragener Gleichspannungspegel in einer Weise wieder eingeführt, die einerseits eine korrekte Trennung von in dem Videosignal enthaltenen Synchronsignalen ermöglicht und andererseits der Einstellung der für die Ansteuerung der Bildwiedergabeanordnung benötigten Signalpegel, insbesondere der Anpassung an den Sperrpunkt der Bildröhre, dient. Ebenso ist es bekannt, die Amplitude des Videosignals zu regeln, um den Bildinhalt mit korrekter Helligkeit wiedergeben zu können. Da die Regelung der Amplitude des Videosignals vom Bildinhalt unabhängig sein soll, um Schwankungen in der Einstellung der Helligkeit und des Kontrastes des wiedergegebenen Bildes mit den Änderungen des Bildinhalts zu vermeiden, werden die Informationen für die Regelung nur von den Synchronsignalen abgeleitet. Damit - im Zusammenhang mit der Klemmung des Videosignals - wird ein vorgegebener Weiß-Spitzenwert für das Videosignal festgelegt, den dieses an denjenigen Stellen des Bildes annimmt, die den weißesten wiederzugebenden Bildinhalt darstellen.

Es tritt jedoch der Fall auf, daß die schwärzesten Teile des Bildinhalts Signalwerte annehmen, die in nicht vorhersehbarem Maße von dem festgelegten Schwarzpegel abweichen. Wird die Dunkelsteuerung der Bildwiedergabeanordnung, beispielsweise der Sperrpunkt der Bildröhre, allein auf den festgelegten Schwarzpegel im Videosignal (auch als Schwarzschulter bezeichnet) ausgerichtet, erhält man im wiedergegebenen Bild auch in Teilen, die schwarz darzustellen sind, unzulässige Helligkeiten. Für eine einwandfreie Bildwiedergabe ist daher zusätzlich eine Korrektur des Videosignals dahingehend erforderlich, daß die schwärzesten Bildteile stets als schwarz, jedoch ebenso die hellsten Bildanteile stets als hell bzw. weiß dargestellt werden.

Aus der US-PS 3,947,631 ist eine automatische Videosignal-Steuerschaltung für einen Fernsehempfänger bekannt, bei der das Videosignal einen Schwarzpegel aufweist, der vom Schwarz-Spitzenwert des Bildinhalts abgeleitet ist, und bei der es ferner einen Weißpegel aufweist, der aus der Kombination eines mittleren Weißwertes und eines Spitzenweißwertes im Bildinhalt erzeugt wird. Diese Steuerschaltung umfaßt dazu zwei ineinandergreifende Regelkreise, nämlich eine Schwarzregelung und eine Weißregelung, durch die über Spitzenwertdetektoren bzw. zusätzlich eine Mittelungsschaltung die dunkelsten bzw. hellsten Stellen des Bildinhalts ermittelt und deren Pegel auf vorgegebene Sollwerte nachgeregelt werden. Beide Regelschleifen wirken dabei auf ein- und denselben Videosignalverstärker.

Aus der DE-OS 34 30 593 ist ein Schaltkreis zur Wiederherstellung des Schwarzpegels bekannt, in dem die unterhalb eines vorgegebenen Pegels eines Videosignals liegende Dunkel- bzw. Schwarzsignalkomponente so verändert wird, daß ein Dunkel- bzw. Schwarz-Spitzenpegel zum Übereinstimmen mit einem Schwarzwertpegel, und zwar durch Rückkopplungssteuerung, gebracht wird. Eine auf der Seite des Weißwertpegels über dem vorgegebenen Pegel liegende Signalkomponente wird durch diese Schwarzwertwiederherstellung nicht verändert, so daß von dieser Schwarzwertwiederherstellung nicht beeinflußte, stabile Farbwiedergabe und stabile Helligkeit gewährleistet sein sollen.

Aus der DE-OS 37 14 861 ist ein Verfahren und eine Vorrichtung zur Aufbereitung von Videosignalen zur Vergrößerung des Bildkontrastes bekannt. Dabei werden in einem ersten Schritt aus einem Videosignal vorbestimmter zeitlicher Länge sowohl der minimale als auch der maximale Wert einer Bildinformation in einem dafür vorgesehenen Schaltungsteil ermittelt. In einem zweiten Schritt wird zwischen dem ermittelten minimalen und maximalen Wert in einem Schaltungsteil ein Mittelwert gebildet, der das Videosignal vorbestimmter zeitlicher Länge mit einem Gleichspannungspegel beaufschlagt. In einem dritten Schritt wird im wesentlichen gleichzeitig zum zweiten Schritt zwischen dem ermittelten minimalen und maximalen Wert in einem anderen Schaltungsteil ein Differenzwert ermittelt, der als Verstärkungsbemessungsgröße schließlich die endgültige Verstärkung des Videosignals in einer Verstärkerschaltung bewirkt.

Aus der GB-OS 2,010,634 ist eine Anordnung zur Kontrastdehnung in einem Videosignal bekannt, durch welches ein Videosignal, welches für eine Bildwiedergabe vorgesehen ist und in einem eingeschränkten Amplitudenbereich variiert, auf einen größeren Kontrastbereich gedehnt werden kann, der zwischen zwei einstellbaren Potentialen für das Videosignal definiert werden kann. Diese Schaltung umfaßt - eingefügt in den Signalweg für das Videosignal, einen ersten Schaltkreis zum Ausrichten des Videosignals auf ein erstes Potential und eine automatische Verstärkungssteuerschaltung, die dem ersten Schaltkreis im Signalweg für das Videosignal vorgeschaltet ist und der das Ausgangssignal dieses ersten Schaltkreises zugefügt wird, um eine komplementäre Ausrichtung auf das zweite Potential vorzunehmen. Sowohl der erste Schaltkreis als auch die automatische Verstärkungssteuerschaltung enthalten je eine Regelschleife. Jede der Regelschleifen besitzt eine Zeitkonstante, die bevorzugt einer Bildperiode entspricht und mit der die laufenden Änderungen in den Minima und Maxima des Videosignals ermittelt werden.

Das gleiche Prinzip verfolgt auch eine aus der EP-PS 91 868 bekannte Videosignal-Verarbeitungsschaltung, die eine Schaltung zur automatischen Kontrastdehnung aufweist, welche die aktuelle Amplitude des Videosignals zwischen vorbestimmten unteren und oberen Referenzspannungen ausrichtet. Dies wird ebenfalls in einer Regelschleife durchgeführt, durch die die veränderbare Verstärkung eines Verstärkers für das Videosignal eingestellt wird. Die aktuellen Minima des Bildinhalts werden in einer Art Klemmschaltung auf eine vorbestimmte untere Referenzspannung ausgerichtet. Zusätzlich ist ein Fenstergenerator vorgesehen, durch den diese Kontrastdehnung nur während eines vorgebbaren Bildausschnitts wirksam geschaltet wird.

Die bekannten Schaltungsanordnungen weisen verschiedene Nachteile auf. So umfaßt die aus der US-PS 3,947,631 bekannte Anordnung zwei ineinandergreifende Regelkreise, deren Konstruktion und Abgleich aufwendig und störanfällig ist. Bei der aus der DE-OS 34 30 593 bekannten Schaltungsanordnung wird dagegen eine Übertragungskennlinie in einem bestimmten Aussteuerungsbereich in der Umgebung eines Schwarzwertpegels dem aktuellen Schwarz-Spitzenpegel des zu verarbeitenden Videosignals angepaßt. Dadurch ergibt sich eine nichtlineare Übertragung des Bildinhalts des Videosignals, die zu Verzerrungen bei der Darstellung des Videobildes führen kann.

Bei der Schaltungsanordnung nach DE-OS 37 14 861 wird stets der aktuelle Signalgehalt, d.h. Bildinhalt, des Videosignals auf einen vorbestimmten, größeren Wertebereich ausgedehnt. Ausgangspunkt ist dabei ein sich ständig ändernder Mittelwert zwischen einem laufend gemessenen maximalen Signalwert und einem ebenfalls laufend gemessenen minimalen Signalwert. In der Praxis treten dadurch starke, vom Bildinhalt abhängige Schwankungen der Helligkeitsaussteuerung des Videosignals auf.

Die GB-OS 2,010,634 zeigt ebenfalls zwei ineinander verschachtelte Regelschleifen und dehnt das Videosignal in der Weise, daß dessen aktuelle Minima und Maxima stets auf vorgegebene Berandungswerte eines vorgegebenen Kontrastbereichs fallen. Auch hierbei schwanken Helligkeits- und Kontrastaussteuerung stark mit dem Bildinhalt. Entsprechendes gilt auch für die aus der EP-PS 91 868 bekannte Schaltungsanordnung.

Die Erfindung hat die Aufgabe, eine Schaltungsanordnung zum Verarbeiten eines Videosignals zu schaffen, bei der eine korrekte Darstellung der schwärzesten und hellsten Stellen des Bildinhalts des Videosignals ohne die vorstehend aufgeführten Nachteile ermöglicht wird. Insbesondere soll diese Schaltungsanordnung einfach aufgebaut und störsicher im Betrieb sein.

Zur Lösung dieser Aufgabe ist die erfindungsgemäße Schaltungsanordnung zum Verarbeiten eines Videosignals, welches einen festgelegten Schwarzpegel, einen vorgegebenen Weiß-Spitzenwert sowie einen vom Bildinhalt abhängigen Schwarz-Spitzenwert aufweist, versehen mit
- einer Detektionsanordnung zum Detektieren der Differenz zwischen dem festgelegten Schwarzpegel im Videosignal und dem aus dem Bildinhalt des Videosignals erfaßten Schwarz-Spitzenwert,
- einer Pegel-Verschiebeanordnung zum Bilden eines schwarzwertkorrigierten Videosignals durch Verschieben des Pegels des Bildinhaltes des Videosignals um die detektierte Differenz in Richtung auf den Schwarzpegel sowie
- einer Amplitudensteueranordnung zum Bilden eines amplitudenkorrigierten Videosignals durch Nachsteuern der Amplitude des Bildinhalts des schwarzwertkorrigierten Videosignals gemäß einem aus der detektierten Differenz gewonnenen Amplitudensteuersignal derart, daß im amplitudenkorrigierten Videosignal derselbe vorgegebene Weiß-Spitzenwert wie im Videosignal wiederhergestellt wird.

Mit der erfindungsgemäßen Schaltungsanordnung wird somit stets eine korrekte Bildwiedergabe erzielt, bei der die schwärzesten Stellen des Bildinhalts tatsächlich als "schwarz" dargestellt werden und die hellsten Bildanteile unverändert bleiben. Der Bildeindruck wird somit stets kontrastreich wiedergegeben, ohne daß Verzerrungen in der Helligkeit auftreten. Dabei arbeitet die erfindungsgemäße Schaltungsanordnung nach dem Prinzip der Signalstellung, bei dem keine Regelschleifen, d.h. keine Rückkopplungen, eingesetzt werden. Dadurch ist von vornherein eine Störmöglichkeit durch Schwingneigung ausgeschlossen. Die erfindungsgemäße Schaltungsanordnung ist darüber hinaus einfach aufgebaut und problemlos mit anderen, üblichen Anordnungen zur Videosignalverarbeitung kombinierbar.

Vorzugsweise wird bei einer Schaltungsanordnung gemäß der Erfindung der Bildinhalt des Videosignals von der Pegel-Verschiebeanordnung nur dann in Richtung auf den Schwarzpegel verschoben, wenn der aus dem Bildinhalt des Videosignals erfaßte Schwarz-Spitzenwert den Schwarzpegel in Richtung auf den Weiß-Spitzenwert überschreitet. Somit wird der Bildinhalt des Videosignals nur dann der erfindungsgemäßen Korrektur unterworfen, wenn seine schwärzesten Stellen heller sind als der festgelegte Schwarzpegel, z.B. die sogenannte Schwarzschulter. Dagegen erfolgt keine Verschiebung, wenn der Schwarz-Spitzenwert "schwärzer" ist als der Schwarzpegel, da dies bei Beibehaltung des im Videosignal auftretenden Weiß-Spitzenwertes eine Verringerung des Bildkontrastes zur Folge haben würde, wodurch sich der Bildeindruck verschlechtern würde.

Insbesondere umfaßt die erfindungsgemäße Schaltungsanordnung eine Begrenzungsschaltung zum Abgeben eines begrenzten Differenzwertes anstelle der in der Detektionsanordnung detektierten Differenz, sofern diese einen vorgebbaren Grenzwert überschreitet. Vorzugsweise ist dabei der begrenzte Differenzwert identisch mit dem vorgebbaren Grenzwert, wobei jedoch zu beachten ist, daß ggf. zwischen diesen beiden Werten ein Skalierungsfaktor auftreten kann, der insbesondere dann zu berücksichtigen ist, wenn die Detektionsanordnung eine Videosignal-Dehnungsschaltung umfaßt, durch die ein vorgebbarer Videosignal-Wertebereich für die Erfassung des Schwarz-Spitzenwertes gedehnt wird. Durch eine solche Videosignal-Dehnungsschaltung wird insbesondere genau derjenige Aussteuerungsbereich des Videosignals überproportional verstärkt, d.h. gedehnt, innerhalb dessen der Schwarz-Spitzenwert des Videosignals auftreten darf, um durch die erfindungsgemäße Schaltungsanordnung vollständig auf den vorgegebenen Schwarzpegel verschoben zu werden. Um diese Verschiebung möglichst exakt durchführen zu können, kann durch die beschriebene Dehnung eine exaktere Erfassung des Schwarz-Spitzenwertes und damit der Differenz zum Schwarzpegel erhalten werden. Schwankt dagegen der Schwarz-Spitzenwert über diesen vorgegebenen Grenzwert hinaus, jenseits dessen eine vollständige Verschiebung des Schwarz-Spitzenwertes auf den Schwarzpegel zur Vermeidung eines verfälschten Bildinhaltes nicht mehr erwünscht ist, ist eine genaue Erfassung der Differenz nicht mehr erforderlich, so daß eine Dehnung des zu messenden Videosignals hier nicht mehr im selben Maße Vorteile bringt.

Nach einer anderen Ausbildung der erfindungsgemäßen Schaltungsanordnung umfaßt die Detektionsanordnung eine Speicheranordnung zum Speichern des Wertes der detektierten Differenz. Diese Speicheranordnung kann mit jedem Halbbildwechsel oder Bildwechsel im Videosignal neu beschrieben werden, entsprechend läßt sich aber eine einmal detektierte Differenz auch für mehrere aufeinanderfolgende Bilder bzw. Halbbilder des Videosignals festhalten. Damit kann wahlweise die detektierte Differenz und damit die Verschiebung des Pegels des Bildinhalts des Videosignals sowie die Amplitudensteuerung entweder zur raschen Korrektur von Schwankungen des Schwarz-Spitzenwertes nachgeführt oder ein über einen längeren Zeitraum bestimmter Mittelwert verwendet werden.

Die Detektionsanordnung umfaßt vorteilhaft eine Schwarz-Spitzenwert-Detektionsstufe, die beim Einsatz einer Videosignal-Dehnungsschaltung bevorzugt mit dieser zusammengefaßt ist. Der von der Schwarz-Spitzenwert-Detektionsstufe detektierte Schwarz-Spitzenwert läßt sich dann zur Bildung der Differenz mit dem festgelegten Schwarzpegel einfach heranziehen.

Insbesondere bei Anwendung einer Videosignal-Dehnungsschaltung ist es weiterhin vorteilhaft, daß die Pegel-Verschiebeanordnung eine Verschiebesignal-Erzeugungsstufe enthält zum Erzeugen eines Verschiebesignals, welches als Stellsignal einer Überlagerungsstufe zum Verschieben des Pegels des Bildinhalts des Videosignals in der Pegel-Verschiebeanordnung zugeleitet wird. Damit läßt sich in einfacher Weise der durch die Videosignal-Dehnungsschaltung eingeführte Skalierungsfaktor kompensieren. Eine entsprechende Kompensation bei der Nachsteuerung der Amplitude des Bildinhalts läßt sich dadurch erzielen, daß die Amplitudensteueranordnung eine Amplitudensteuersignal-Erzeugungsstufe enthält zum Erzeugen des Amplitudensteuersignals, welches einer Amplitudensteuerstufe zugeführt wird zum Nachsteuern der Amplitude des Bildinhalts.

Die erfindungsgemäße Schaltungsanordnung ist bevorzugt kombinierbar sowohl mit einer Amplitudenregelanordnung zum Regeln der Amplitude des der Detektionsanordnung zugeführten Videosignals als auch mit einer Klemmschaltung zum Klemmen des festgelegten Schwarzpegels in dem der Detektionsanordnung zugeführten Videosignal auf einen vorgebbaren Wert. Während durch die Amplitudenregelanordnung, beispielsweise ausgeführt als automatische Verstärkungsregelung, eine bestimmte Amplitude des gesamten Videosignals und damit ein Weiß-Spitzenwert vorgegeben werden kann, wird durch die Klemmschaltung der festgelegte Schwarzpegel, bevorzugt die "Schwarzschulter", auf einen vorgebbaren Wert derart eingestellt, daß die weitere Verarbeitung des Videosignals, auch in der erfindungsgemäßen Schaltungsanordnung, mit definierten Signalpegeln ermöglicht wird.

Ein Ausführungsbeispiel der Erfindung ist in der Zeichnung dargestellt und wird im folgenden näher beschrieben. Es zeigen:
Fig. 1 eine blockschematische Darstellung eines Ausführungsbeispiels der Erfindung und
Fig. 2 ein Diagramm zur Erläuterung der Funktionsweise der Schaltungsanordnung nach Fig. 1.

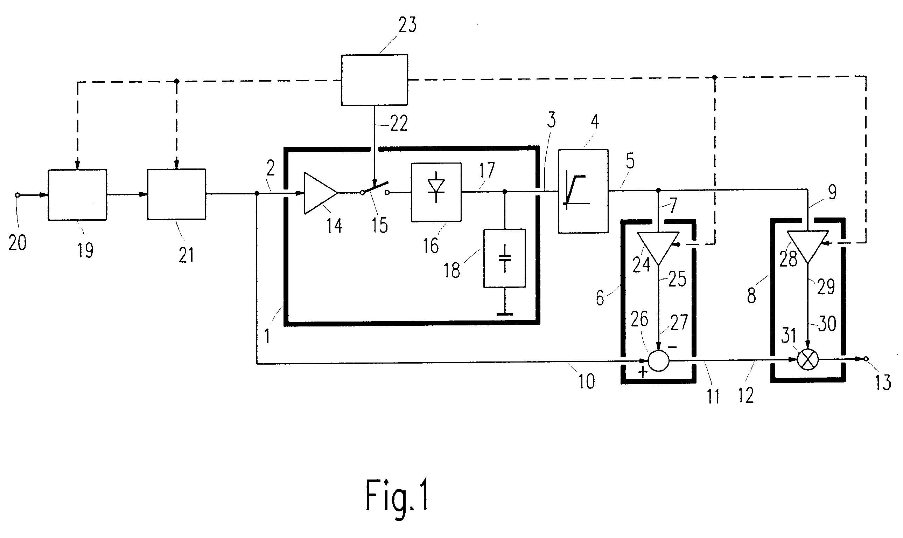

Die Schaltungsanordnung nach Fig. 1 umfaßt eine Detektionsanordnung 1 mit einem Eingang 2 zum Zuführen eines Videosignals und einem Ausgang 3 zum Abgeben eines der Differenz zwischen einem festgelegten Schwarzpegel im Videosignal und einem aus dem Bildinhalt des Videosignals erfaßten Schwarz-Spitzenwert entsprechenden Signal. Dieses Signal wird vom Ausgang 3 über eine Begrenzungsschaltung 4 geführt, die an ihrem Ausgang 5 das der detektierten Differenz entsprechende Signal vom Ausgang 3 der Detektionsanordnung abgibt, sofern diese Differenz einen vorgebbaren Grenzwert nicht überschreitet. Im anderen Fall wird am Ausgang 5 ein begrenzter Differenzwert abgegeben.

Das Signal vom Ausgang 5 der Begrenzungsschaltung 4 wird zum einen einer Pegel-Verschiebeanordnung 6 an ihrem Eingang 7 sowie einer Amplitudensteueranordnung 8 an ihrem Eingang 9 zugeleitet.

Das dem Eingang 2 der Detektionsanordnung 1 zugeführte Videosignal wird außerdem einem Videosignaleingang 10 der Pegel-Verschiebeanordnung zugeleitet. In der Pegel-Verschiebeanordnung 6 wird aus diesem Videosignal ein schwarzwertkorrigiertes Videosignal gebildet, welches an einem Ausgang 11 der Pegel-Verschiebeanordnung 6 abgegeben wird. Der Amplitudensteueranordnung 8 wird dieses schwarzwertkorrigierte Videosignal über einen Videosignaleingang 12 zugeführt. In der Amplitudensteueranordnung 8 wird aus dem schwarzwertkorrigierten Videosignal durch Nachsteuern der Amplitude des Bildinhalts ein amplitudenkorrigiertes Videosignal gebildet und an einem Ausgang 13 abgegeben.

Zur Durchführung der im vorstehenden grob umrissenen Funktion der Schaltungsanordnung nach Fig. 1 weist die Detektionsanordnung 1 eine Videosignal-Dehnungsschaltung 14 auf. Diese umfaßt im einfachsten Fall im wesentlichen eine Verstärkeranordnung, durch die ein vorgebbarer Videosignal-Wertebereich mit einem größeren Verstärkungsfaktor verstärkt wird als das übrige, außerhalb dieses Wertebereichs befindliche Videosignal. In diesem Videosignal-Wertebereich sollte die Videosignal-Dehnungsschaltung vorzugsweise ein möglichst ideales Übertragungsverhalten zeigen. Unter diesen Voraussetzungen ist eine Detektion des Schwarz-Spitzenwertes mit hoher Genauigkeit möglich.

Das vom Eingang 2 der Detektionsanordnung 1 über die Videosignal-Dehnungsschaltung 14 geleitete Videosignal wird anschließend über einen Austastschalter 15 einer Schwarz-Spitzenwert-Detektionsstufe 16 zugeführt. Diese gibt an ihrem Ausgang 17 ein dem Schwarz-Spitzenwert entsprechendes Signal ab, welches einer Speicheranordnung 18 zugeleitet wird und gleichzeitig am Ausgang 3 der Detektionsanordnung 1 zur Verfügung steht. Im einfachsten Fall werden die Schwarz-Spitzenwert-Detektionsstufe 16 und die Speicheranordnung 18 durch die Kombination einer Gleichrichteranordnung mit einem Kondensator gebildet.

Das vorstehend beschriebene Ausführungsbeispiel macht sich die Tatsache zunutze, daß der detektierte Schwarz-Spitzenwert am Ausgang 17 unmittelbar der Differenz zwischen dem festgelegten Schwarzpegel im Videosignal und dem Schwarz-Spitzenwert entspricht. Dies wird dadurch erreicht, daß die beschriebene Schaltungsanordnung mit einer Klemmschaltung 19 zum Klemmen des festgelegten Schwarzpegels im Videosignal verbunden ist. Dieser Klemmschaltung 19 wird über einen Eingang 20 das Videosignal zugeleitet, welches beispielsweise von einer Fernsehempfangsanordnung (Antenne, Tuner, Demodulator) bereitgestellt wird. Dieses Videosignal am Eingang 20 enthält zunächst keinen definierten Gleichpegel und wird daher mit dem festgelegten Schwarzpegel, d.h. beispielsweise der sogenannten Schwarzschulter, der relativ zum übrigen Inhalt des Videosignals eine definierte Lage einnimmt, auf einen vorgebbaren Wert geklemmt. Für die folgende Videosignalbearbeitung kann dann der festgelegte Schwarzpegel, der nun auch einen festen, absoluten Wert aufweist, als Referenzpegel verwendet werden. Auf diesen Referenzpegel wird dann in der Detektionsanordnung 1 auch der detektierte Schwarz-Spitzenwert bezogen, so daß dessen detektierter Wert unmittelbar der Differenz zwischen diesem Schwarz-Spitzenwert und dem Schwarzpegel entspricht. Es sind jedoch in einer Abwandlung dieser Ausführungsform auch Signalverarbeitungsstufen möglich, die eine gesonderte Ermittlung der Höhe des Schwarzpegels vornehmen und dann eine Differenzbildung mit dem aus dem Bildinhalt des Videosignals erfaßten Schwarz-Spitzenwert vornehmen.

Die Anordnung nachFig. 1 umfaßt weiterhin eine Amplitudenregelanordnung 21, zum Regeln der Amplitude des Videosignals, bevor dieses über den Eingang 2 der Detektionsanordnung 1 zugeleitet wird. Derartige Amplitudenregelanordnungen für Videosignale sind im Prinzip bekannt und werden auch als automatische Verstärkungsregelung bezeichnet. Im Beispiel gemäß Fig. 1 wird das Videosignal vom Eingang 20 zuerst über die Klemmschaltung 19 und dann über die Amplitudenregelanordnung 21 geführt. Es ist jedoch auch möglich, die Reihenfolge, in der die Klemmschaltung 19 und die Amplitudenregelanordnung 21 angeordnet sind, zu vertauschen.

Durch den Austastschalter 15 in der Detektionsanordnung 1 wird sichergestellt, daß für die Ermittlung des Schwarz-Spitzenwertes in der Detektionsstufe 16 ausschließlich der Bildinhalt des Videosignals herangezogen wird. Durch den Austastschalter 15 werden dazu alle Synchronsignale und ggf. weitere Signalanteile des Videosignals ausgeblendet, die nicht unmittelbar Teile des Bildinhalts darstellen. Dazu gehören auch die Schwarzpegel (Schwarzschulter), Farbsynchronsignale, Datenzeilen und dergleichen. Der Austastschalter 15 wird über eine Leitung 22 von einem Austastsignalgenerator 23 angesteuert, der ebenfalls von an sich üblicher Bauart ist.

Die der Detektionsanordnung 1 nachgeschaltete Begrenzungsschaltung 4, die eine Begrenzung der Verschiebung des Pegels des Bildinhalts bewirken soll, um übermäßige Veränderungen des Bildeindrucks zu vermeiden, kann in einer Abwandlung des dargestellten Ausführungsbeispiels mit der Videosignal-Dehnungsschaltung 14 kombiniert werden. In der gezeigten Fassung des Ausführungsbeispiels nach Fig. 1 kann von der Detektionsanordnung 1 grundsätzlich ein beliebiger Wert für die Differenz zwischen dem Schwarzpegel im Videosignal und dem Schwarz-Spitzenwert des Bildinhalts detektiert und am Ausgang 3 abgegeben werden. Erst in der nachgeschalteten Begrenzungsschaltung 4 wird dieser Wert der Differenz in einer Weise eingegrenzt, die zwar einerseits eine Korrektur des Bildeindrucks ermöglicht, andererseits aber eine Verfälschung des Bildeindrucks vermeidet. Wenn dagegen die Videosignal-Dehnungsschaltung 14 mit einer Übertragungskennlinie ausgebildet wird, gemäß der nur innerhalb des durch die Begrenzungsschaltung 4 vorgegebenen Wertebereichs eine lineare Übertragung des Videosignals erfolgt, während außerhalb dieses Wertebereichs nur konstante Grenzwerte übertragen werden, kann die gesonderte Begrenzungsschaltung 4 entfallen.

Die Pegel-Verschiebeanordnung 6 gemäß Fig. 1 weist eine Verschiebesignal-Erzeugungsstufe 24 auf, in der aus dem vom Ausgang 5 der Begrenzungsschaltung 4 abgegebenen Signal für die detektierte Differenz zwischen dem Schwarzpegel und dem Schwarz-Spitzenwert ein Verschiebesignal erzeugt wird, welches am Ausgang 25 der Verschiebesignal-Erzeugungsstufe 24 bereitgestellt wird. Die Verschiebesignal-Erzeugungsstufe 24 ist bevorzugt mit einer Verstärkeranordnung ausgeführt, deren Verstärkungsfaktor entsprechend den Übertragungseigenschaften der Detektions-anordnung 1 und der Begrenzungsschaltung 4 derart bestimmt wird, daß das Verschiebesignal am Ausgang 25 dem Wert der Differenz zwischen dem Schwarzpegel und dem Schwarz-Spitzenwert am Eingang 2 der Detektionsanordnung 1 entspricht. Das Verschiebesignal wird als Stellsignal einer Überlagerungsstufe 26 an deren subtrahierendem Eingang 27 zugeleitet. Einem positiven, mit dem Videosignaleingang 10 der Pegel-Verschiebeanordnung 6 verbundenen Eingang der Überlagerungsstufe 26 wird das Videosignal zugeführt. Die Überlagerungsstufe 26 ist als Subtrahierschaltung ausgebildet, in welcher der Wert des Stellsignals vom Videosignal subtrahiert wird. Das auf diese Weise erzeugte schwarzwertkorrigierte Videosignal wird an einem mit dem Ausgang 11 der Pegel-Verschiebeanordnung 6 verbundenen Ausgang der Überlagerungsstufe 26 abgegeben.

Für die anschließende Nachsteuerung der Amplitude des Bildinhalts des schwarzwertkorrigierten Videosignals umfaßt die Amplitudensteueranordnung 8 eine Amplitudensteuersignal-Erzeugungsstufe 28, die ebenfalls im wesentlichen eine Verstärkeranordnung umfaßt. Durch diese wird das der in der Detektionsanordnung 1 detektierten Differenz entsprechende und über den Eingang 9 der Amplitudensteueranordnung 8 zugeführte Signal in ein Amplitudensteuersignal umgesetzt, welches über einen Ausgang 29 der Amplitudensteuersignal-Erzeugungsstufe 28 entnommen und einem Steuereingang 30 einer ebenfalls von der Amplitudensteueranordnung 8 umfaßten Amplitudensteuerstufe 31 zum Nachsteuern der Amplitude des Bildinhalts zugeführt wird. Die Amplitudensteuerstufe 31 ist bevorzugt als Multiplikationsstufe ausgebildet. In ihr werden das schwarzwertkorrigierte Videosignal vom Videosignaleingang 12 der Amplitudensteueranordnung 8 und das Amplitudensteuersignal vom Steuereingang 30 multiplikativ verknüpft und als amplitudenkorrigiertes Videosignal an den Ausgang 13 der Amplitudensteueranordnung 8 abgegeben. Der Verstärkungsfaktor der Amplitudensteuersignal-Erzeugungsstufe 28 ist wieder so gewählt, daß - bedingt durch das Übertragungsverhalten der Detektionsanordnung 1 und der Begrenzungsschaltung 4 - ein korrekter Multiplikationsfaktor zu der gerade von der Detektionsanordnung 1 detektierten Differenz erzeugt wird.

Wie bereits die Klemmschaltung 19 und die Amplitudenregelanordnung 21 konnen auch die Pegel-Verschiebeanordnung 6 und die Amplitudensteueranordnung 8 und darin insbesondere die Verschiebesignal-Erzeugungsstufe 24 bzw. die Amplitudensteuersignal-Erzeugungsstufe 28 mit dem Austastsignalgenerator 23 verbunden sein. Über diese Verbindung werden das Verschiebesignal bzw. das Amplitudensteuersignal nur während des Bildinhalts des Videosignals wirksam geschaltet, während zu den übrigen Zeitintervallen das Videosignal unverändert übertragen werden kann.

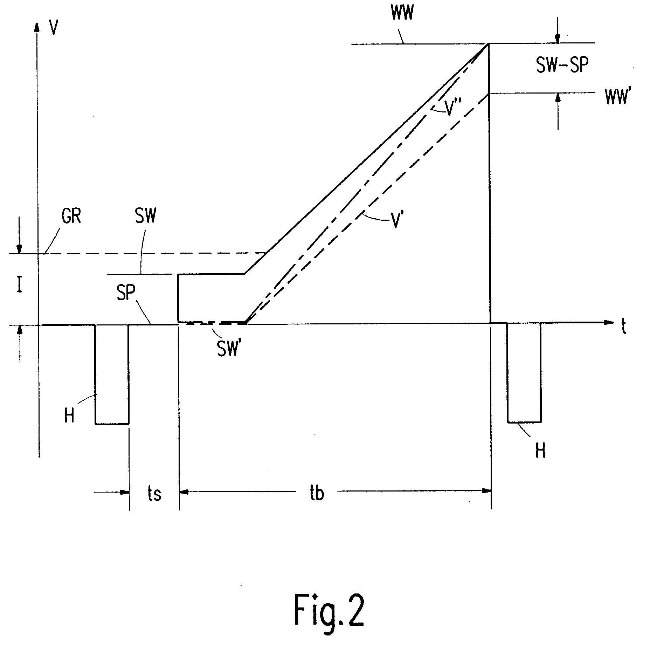

Fig. 2 zeigt grobschematisch den Verlauf eines Videosignals V über der Zeit t zwischen zwei Horizontal-Synchronimpulsen H am Beispiel des Luminanzsignals. Dieses weist in einem Zeitintervall ts einen festgelegten Schwarzpegel SP auf. Das Zeitintervall ts wird auch als Schwarzschulter bezeichnet. In einem weiteren Zeitintervall tb umfaßt das Videosignal V den Bildinhalt einer Zeile eines Videobildes. Zur Verdeutlichung der Funktionsweise der erfindungsgemäßen Schaltungsanordnung ist für das Videosignal V im Zeitintervall tb ein Signalverlauf gewählt, der zunächst einen konstanten Wert annimmt, der dem Schwarz-Spitzenwert SW des Bildinhalts des Videosignals V entspricht und der anschließend bis zum Ende des Zeitintervalls tb linear bis zum Weiß-Spitzenwert WW ansteigt. Es ist erkennbar, daß der aus dem Bildinhalt des Videosignals V erfaßte Schwarz-Spitzenwert SW den Schwarzpegel SP in Richtung auf den Weiß-Spitzenwert WW überschreitet. Wird eine mit diesem Videosignal V gespeiste Bildröhre derart ausgesteuert, daß ihr Sperrpunkt mit dem Schwarzpegel SP zusammenfällt, werden die Bildanteile, für die das Videosignal V den Schwarz-Spitzenwert SW annimmt, auf dem Bildschirm der Bildröhre heller als schwarz dargestellt. Außerdem ist der Kontrast des mit diesem Videosignal V dargestellten Bildes, der durch den Signalhub zwischen dem Weiß-Spitzenwert WW und dem Schwarz-Spitzenwert SW gebildet wird, gegenüber einem optimal eingestellten Kontrast vermindert.

Durch die gemäß der Erfindung eingesetzte Pegel-Verschiebeanordnung wird nun zunächst der Pegel des Bildinhalts des Videosignals V, d.h. der Signalverlauf im Zeitintervall tb, um die Differenz zwischen dem Schwarz-Spitzenwert SW und dem Schwarzpegel SP zum Schwarzpegel SP hin verschoben, wodurch der Schwarz-Spitzenwert SW' mit dem Schwarzpegel SP zusammenfällt. Dadurch ergibt sich im Zeitintervall tb für den Bildinhalt des Videosignals V ein zeitlicher Verlauf, wie er durch die gestrichelte Linie dargestellt und mit dem Bezugszeichen V' bezeichnet ist. Es ist erkennbar, daß bei diesem Verlauf V' auch der Weiß-Spitzenwert WW' um die Differenz zwischen dem Schwarz-Spitzenwert SW und dem Schwarzpegel SP verschoben, d.h. vermindert ist.

Zur Wiederherstellung des ursprünglichen Weiß-Spitzenwertes WW, d.h. zur Bewahrung des optimalen Bildkontrastes, wird erfindungsgemäß anschließend in der Amplitudensteueranordnung (Bezugszeichen 8 nach Fig. 1) ein amplitudenkorrigiertes Videosignal gebildet, welches in Fig. 2 innerhalb des Zeitintervalls tb mit einer strichpunktierten Linie dargestellt und mit dem Bezugszeichen V'' bezeichnet ist. Das amplitudenkorrigierte Videosignal V'' ist in seiner Amplitude derart nachgesteuert, daß es den Schwarz-Spitzenwert SW' und den Weiß-Spitzenwert WW aufweist. Damit werden bei der Darstellung des Bildes in der Bildröhre die dem Schwarz-Spitzenwert SW' zugeordneten Bildteile korrekt als schwarz dargestellt, wohingegen die am hellsten wiederzugebenden Bildanteile nicht verdunkelt werden. Damit ist ein optimaler Kontrast bei der Bildwiedergabe erreicht.

Grundsätzlich ist es möglich, einen Schwarz-Spitzenwert SW beliebiger Höhe auf den vorgegebenen Schwarzpegel SP zu verschieben. Dies würde jedoch bedeuten, daß auch Videosignale mit einem gewollt hellen Bildinhalt entsprechend nachgesteuert werden, wodurch sich ein verfälschter Bildeindruck ergibt. Daher wird der Wertebereich für den Schwarz-Spitzenwert SW, innerhalb dessen er auf den Schwarzpegel SP verschoben wird, durch einen geeignet gewählten Grenzwert GR in Richtung auf den Weiß-Spitzenwert WW begrenzt. Dies ist ebenfalls durch eine gestrichelte Linie in Fig. 2 angedeutet. Da außerdem der Bildinhalt des Videosignals von der Pegel-Verschiebeanordnung (Bezugszeichen 6 in Fig. 1) nur dann in Richtung auf den Schwarzpegel SP verschoben werden soll, wenn der aus dem Bildinhalt des Videosignals V erfaßte Schwarz-Spitzenwert SW den Schwarzpegel SP in Richtung auf den Weiß-Spitzenwert WW überschreitet, wird das Intervall I, innerhalb dessen der Schwarz-Spitzenwert SW auftreten darf, um vollständig auf den Schwarzpegel SP verschoben zu werden, zu niedrigen Werten des Videosignals V hin durch den Schwarzpegel SP selbst begrenzt. Tritt nun im Bildinhalt des Videosignals V ein Schwarz-Spitzenwert SW auf, der den Grenzwert GR überschreitet, wird der Bildinhalt des Videosignals V lediglich um die Differenz GR-SP in Richtung auf den Schwarzpegel SP verschoben. Damit werden die dunkelsten Stellen des Bildinhalts nicht mehr als schwarz dargestellt. Im anderen Fall, in dem der erfaßte Schwarz-Spitzenwert SW niedriger ist als der Schwarzpegel SP, erfolgt vorzugsweise überhaupt keine Verschiebung des Bildinhalts des Videosignals V. Dadurch wird eine unzulässige Bildaufhellung bzw. eine Kontrastverminderung vermieden.

Da bei der erfindungsgemäßen Schaltungsanordnung die Information über die Pegelverschiebung und die Amplitudennachsteuerung allein aus der Lage des Schwarz-Spitzenwertes SW relativ zum Schwarzpegel SP gewonnen wird, lassen sich damit Signale beliebigen Bildinhalts verarbeiten, ohne daß dabei störende Effekte in der Darstellung des Bildes auftreten können. Insbesondere werden auch Videosignale mit sehr dunklem Bildinhalt nicht unzulässig aufgehellt, Videosignale mit sehr hellem Bildinhalt weder unzulässig verdunkelt noch in der Helligkeit überstrahlt. Das durch die Erfindung erhaltene, bezüglich seines Schwarz-Spitzenwertes und seiner Amplitude korrigierte Videosignal eignet sich besonders gut für eine problemfreie Weiterverarbeitung in einer sogenannten Gammakorrektur-Anordnung, wie sie bevorzugt für den Betrieb einer Bildröhre Verwendung findet.

## Patentansprüche

1. Schaltungsanordnung zum Verarbeiten eines Videosignals (V), welches einen festgelegten Schwarzpegel (SP), einen vorgegebenen Weiß-Spitzenwert (WW) sowie einen vom Bildinhalt (während tb) abhängigen Schwarz-Spitzenwert (SW) aufweist mit
- einer Detektionsanordnung (1) zum Detektieren der Differenz zwischen dem festgelegten Schwarzpegel (SP) im Videosignal (V) und dem aus dem Bildinhalt (während tb) des Videosignals (V) erfaßten Schwarz-Spitzenwert (SW),
- einer Pegel-Verschiebeanordnung (6) zum Bilden eines schwarzwertkorrigierten Videosignals (V') durch Verschieben des Pegels des Bildinhaltes des Videosignals (V) um die detektierte Differenz in Richtung auf den Schwarzpegel (SP) sowie
- einer Amplitudensteueranordnung (8) zum Bilden eines amplitudenkorrigierten Videosignals (V'') durch Nachsteuern der Amplitude des Bildinhalts (während tb) des schwarzwertkorrigierten Videosignals (V') gemäß einem aus der detektierten Differenz gewonnenen Amplitudensteuersignal derart, daß im amplitudenkorrigierten Videosignal (V'') derselbe vorgegebene Weiß-Spitzenwert (WW) wie im des Videosignal (V) wiederhergestellt wird.

2. Schaltungsanordnung nach Anspruch 1,
**dadurch gekennzeichnet**, daß der Bildinhalt des Videosignals (V) von der Pegel-Verschiebeanordnung (6) nur dann in Richtung auf den Schwarzpegel (SP) verschoben wird, wenn der aus dem Bildinhalt des Videosignals (V) erfaßte Schwarz-Spitzenwert (SW) den Schwarzpegel (SP) in Richtung auf den Weiß-Spitzenwert (WW) überschreitet.

3. Schaltungsanordnung nach Anspruch 1 oder 2,
**gekennzeichnet durch** eine Begrenzungsschaltung (4) zum Abgeben eines begrenzten Differenzwertes anstelle der in der Detektionsanordnung (1) detektierten Differenz, sofern diese einen vorgebbaren Grenzwert (GR) überschreitet.

4. Schaltungsanordnung nach Anspruch 1, 2 oder 3,
**dadurch gekennzeichnet**, daß die Detektionsanordnung (1) eine Speicheranordnung (18) umfaßt zum Speichern des Wertes der detektierten Differenz.

5. Schaltungsanordnung nach einem der vorhergehenden Ansprüche,
**dadurch gekennzeichnet**, daß die Detektionsanordnung (1) eine Schwarz-Spitzenwert-Detektionsstufe (16) umfaßt.

6. Schaltungsanordnung nach einem der vorhergehenden Ansprüche,
**dadurch gekennzeichnet**, daß die Detektionsanordnung (1) eine Videosignal-Dehnungsschaltung (14) umfaßt, durch die ein vorgebbarer Videosignal-Wertebereich für die Erfassung des Schwarz-Spitzenwertes (SW) gedehnt wird.

7. Schaltungsanordnung nach einem der vorhergehenden Ansprüche,
**dadurch gekennzeichnet**, daß die Pegel-Verschiebeanordnung (6) eine Verschiebesignal-Erzeugungsstufe (24) enthält zum Erzeugen eines Verschiebesignals, welches als Stellsignal einer Überlagerungsstufe (26) zum Verschieben des Pegels des Bildinhalts des Videosignals (V) in der Pegel-Verschiebeanordnung (6) zugeleitet wird.

8. Schaltungsanordnung nach einem der vorhergehenden Ansprüche,
**dadurch gekennzeichnet**, daß die Amplitudensteueranordnung (8) eine Amplitudensteuersignal-Erzeugungsstufe (28) enthält zum Erzeugen des Amplitudensteuersignals, welches einer Amplitudensteuerstufe (31) zugeführt wird zum Nachsteuern der Amplitude des Bildinhalts.

9. Schaltungsanordnung nach einem der vorhergehenden Ansprüche,
**gekennzeichnet durch** eine Amplitudenregelanordnung (21) zum Regeln der Amplitude des der Detektionsanordnung zugeführten Videosignals (V).

10. Schaltungsanordnung nach einem der vorhergehenden Ansprüche,
**gekennzeichnet durch** eine Klemmschaltung (19) zum Klemmen des festgelegten Schwarzpegels (SP) in dem der Detektionsanordnung (1) zugeführten Videosignal (V) auf einen vorgebbaren Wert.
